(19) Europäisches Patentamt
European Patent Office
Office européen des brevets

(11) **EP 1 841 151 A1**

(12) **DEMANDE DE BREVET EUROPEEN**

(43) Date de publication:
**03.10.2007 Bulletin 2007/40**

(51) Int Cl.:
***H04L 12/56*** *(2006.01)*

(21) Numéro de dépôt: **07102227.1**

(22) Date de dépôt: **13.02.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **31.03.2006  FR 0602810**

(71) Demandeur: **ARTERIS**
**78280 Guyancourt (FR)**

(72) Inventeurs:
• **Boucard, Philippe**
**78150 Le Chesnay (FR)**
• **Montperrus, Luc**
**78180 Montigny le Bretonneux (FR)**

(74) Mandataire: **Casalonga, Axel**
**Bureau Casalonga & Josse**
**Bayerstrasse 71/73**
**80335 München (DE)**

(54) **Système de commutation de message**

(57)     Le système de commutation de messages (51) sur puce comprend au moins deux entrées (52, 53 54, 55) et au moins une sortie (56), des premiers moyens d'arbitrage (62) dédiés à ladite sortie (56), et des moyens de gestion (64) adaptés pour déterminer un ordre relatif $OR(i,j)$ d'une entrée par rapport à l'autre, pour tout couple d'entrées distinctes appartenant au système (51) et ayant émis des requêtes d'attribution de ladite sortie (56), et adaptés pour attribuer ladite sortie (56). Lesdits moyens de gestion (64) comprennent des moyens de mémorisation (70) adaptés pour mémoriser lesdits ordres relatifs $OR(i,j)$, des moyens d'initialisation (66) adaptés pour initialiser lesdits ordres relatifs $OR(i,j)$ de telle sorte qu'une seule desdites entrées soit prioritaire à l'initialisation, et des moyens de mise à jour (68) aptes à mettre à jour l'ensemble desdits ordres relatifs lorsqu'une nouvelle requête arrive auxdits premiers moyens d'arbitrage (62), ou lorsque ladite sortie est attribuée à une desdites entrées.

FIG.5

EP 1 841 151 A1

**Description**

La présente invention porte sur un système de commutation de messages comprenant au moins deux entrées et au moins une sortie.

Dans un réseau de communication sur silicium ("Network on Chip" en langue anglaise) reliant de nombreux agents du réseau, des ressources sont mises en commun afin d'obtenir le meilleur compromis entre le coût et les performances du réseau.

En effet, relier directement deux agents du réseau dès qu'il existe des échanges de données entre ces agents, serait d'un coût excessif. Les échanges de données sont regroupés sur des liaisons communes afin d'utiliser au mieux les performances de chaque lien du réseau. Un tel partage de ressources nécessite la présence d'éléments d'arbitrage ou éléments de décision au niveau de commutateurs présents à des noeuds du réseau.

Un commutateur permet de faire converger en entrée les données transférées sur plusieurs liens, et de les transférer sur une pluralité de liens en sortie.

Les données qui circulent sur de tels liens sont sous la forme de paquets de données constitués d'un entête et de données utiles. L'entête contient des données d'entête permettant de router ou diriger le paquet à travers le réseau et peut éventuellement contenir une information de priorité concernant le paquet de données.

Un commutateur comprend un dispositif de routage qui détermine, pour un paquet arrivé sur une entrée du commutateur, la sortie du commutateur à laquelle est destiné le paquet, en fonction des données d'entête de l'entête du paquet.

En outre, chaque sortie du commutateur comprend un dispositif d'arbitrage qui décide, pour la sortie correspondante, quel paquet va lui être attribué, notamment en cas de conflit entre plusieurs paquets de données.

Dans la suite de la description, on nommera requête d'attribution de sortie, une requête émise par une entrée, ou plus précisément par la logique associée à une entrée du commutateur, en fonction des paquets de données présents sur les entrées, et à destination d'un dispositif d'arbitrage associé à une sortie.

Un dispositif d'arbitrage décide, à un instant donné, à quelle entrée, parmi une pluralité d'entrées sur lesquelles des paquets de données sont présents et destinés à la sortie correspondante, il doit attribuer la sortie. Lorsque la sortie est disponible, il prévient alors l'entrée choisie, et le paquet de données en attente peut alors être transmis par la sortie associée.

Lorsque la bande passante en sortie n'est jamais saturée, n'importe quels types de critères d'arbitrage peuvent être choisis, et particulièrement les plus économiques, comme la priorité fixe ou l'attribution aléatoire de la sortie.

L'efficacité d'un dispositif d'arbitrage se juge donc notamment en cas de conflit d'attribution d'une sortie lorsque la bande passante est saturée sur cette sortie.

Un bon compromis pour dimensionner un réseau consiste à avoir la plupart du temps une bande passante non saturée, et pour faire face à des pics occasionnels d'échanges de données entraînant une saturation de certaines bandes passantes, à avoir un système permettant de gérer de telles conditions d'urgence.

Divers dispositifs d'arbitrage tendant à pallier à ce type de problème existent.

Par exemple, les dispositifs d'arbitrage de type "round-robin" utilisent un ordre relatif fixe tournant pour les entrées d'un commutateur. Après chaque attribution de la sortie, l'ordre relatif minimal est affecté à l'entrée suivante dans la liste circulaire des entrées, ou mieux, à l'entrée qui vient d'avoir la sortie attribuée.

Cependant, un tel dispositif d'arbitrage devient coûteux et complexe lorsqu'il est nécessaire de traiter plusieurs niveaux de priorités dynamiques, car il faut avoir un arbitrage de type round-robin par niveau de priorité. En outre, les priorités sont généralement liées à une notion de qualité de service. Il y a généralement peu de niveaux ou degrés de priorités, car ces derniers sont associés à des situations exceptionnelles. Les signaux de priorité peuvent être indépendants des signaux de requête et peuvent donc être positionnés à tout moment. De plus, il peut y avoir rétractation tant sur les signaux de requête que sur les signaux de priorité.

Il est nécessaire d'avoir un arbitrage rapide, car les signaux de requêtes ou de priorités arrivent tardivement dans le cycle d'horloge.

Par exemple, des dispositifs d'arbitrage servent les requêtes d'attribution de sortie émises par des entrées dans leur ordre d'arrivée (FCFS "first-come-first-serve" en langue anglaise, ou LRU "least recently used"). Un tel dispositif d'arbitrage utilise des files d'attente ou des compteurs.

Cependant, s'il est nécessaire de traiter plusieurs requêtes arrivant simultanément, ou si une requête de haute priorité arrivant tardivement doit être attribuée rapidement, il est alors très difficile de mettre à jour rapidement les files d'attente utilisées.

De tels dispositifs d'arbitrage présentent des problèmes de coût ou d'efficacité.

Ainsi, un but de l'invention est d'obtenir un système de commutation de messages mettant en oeuvre un arbitrage efficace en cas de pics d'utilisation de bandes passantes de sorties, à coût réduit.

Ainsi, selon un aspect de l'invention, il est proposé un système de commutation de messages sur puce comprenant au moins deux entrées et au moins une sortie, des premiers moyens d'arbitrage dédiés à ladite sortie, et des moyens de gestion adaptés pour déterminer un ordre relatif OR(i,j) d'une entrée par rapport à l'autre, pour tout couple d'entrées distinctes appartenant au système et ayant émis des requêtes d'attribution de ladite sortie. Les moyens de gestion sont en outre adaptés pour attribuer ladite sortie. Lesdits moyens de gestion comprennent des moyens de mémorisation adaptés pour mémoriser lesdits ordres relatifs OR(i,j), des moyens d'initialisation adaptés pour initialiser lesdits ordres relatifs OR(i,j) de telle sorte qu'une seule desdites entrées soit prioritaire à l'initialisation, et des moyens de mise à jour aptes à mettre à jour l'ensemble desdits ordres relatifs lorsqu'une nouvelle requête arrive auxdits premiers moyens d'arbitrage, ou lorsque ladite sortie est attribuée à une desdites entrées.

Un tel système permet de gérer les pics d'utilisation de la bande passante sur le lien connecté à une sortie d'un commutateur, de manière efficace et à coût réduit.

En effet, la mémorisation des ordres relatifs permet d'améliorer de manière significative la rapidité de l'arbitrage, et permet de réaliser de manière simple et peu coûteuse un système qui combine le mécanisme FCFS (la première requête arrivée est la première servie) et le mécanisme LRU (priorité à l'entrée servie le moins récemment).

Ainsi, une parfaite équité entre les entrées est assurée, et puisque les ordres relatifs sont connus pour tous les couples d'entrées, ils sont connus pour tous les couples d'un sous-ensemble d'entrées, ce qui permet de pouvoir utiliser un filtrage en entrée sans altérer l'équité d'affectation de la sortie.

L'assurance d'une parfaite équité de l'arbitrage permet d'éviter des congestions du réseau au niveau des commutateurs.

Selon un mode de réalisation, lesdits moyens de gestion sont adaptés pour attribuer l'ordre relatif OR(i,j) d'une entrée par rapport à l'autre, pour tout couple d'entrées distinctes appartenant au système, en fonction de l'ordre d'arrivée des requêtes correspondantes. L'entrée pour laquelle la requête correspondante est arrivée en premier est prioritaire. Lesdits moyens de gestion sont adaptés, lorsque plusieurs requêtes arrivent simultanément, pour attribuer l'ordre relatif d'une entrée par rapport à l'autre, pour tout couple d'entrées distinctes appartenant au système, de sorte qu'une entrée est prioritaire sur une autre entrée quand ladite sortie a été dernièrement attribuée à ladite entrée avant la dernière attribution de ladite sortie à l'autre entrée.

Dans un mode de réalisation, le système comprend, en outre, des moyens de filtrage adaptés pour filtrer la ou les requêtes d'attribution de sortie émises par des entrées à destination de ladite sortie en sélectionnant la ou les requêtes les plus prioritaires et de priorité identique parmi la ou lesdites requêtes d'attribution, lorsque lesdites requêtes peuvent être de priorités différentes.

Selon un mode de réalisation, lesdits moyens de gestion sont adaptés, lorsqu'une unique requête est sélectionnée par lesdits moyens de filtrage, pour attribuer ladite sortie à ladite unique requête sélectionnée par lesdits moyens de filtrage, et lorsque plusieurs requêtes sont sélectionnées par lesdits moyens de filtrage et qu'une desdites requêtes sélectionnées est arrivée avant les autres, pour attribuer ladite sortie à ladite requête arrivée avant les autres parmi les requêtes sélectionnées. De plus, lesdits moyens de gestion sont adaptés, lorsque plusieurs requêtes sont sélectionnées par lesdits moyens de filtrage et sont arrivées simultanément avant les autres requêtes sélectionnées, pour attribuer ladite sortie à la requête ayant l'ordre relatif le plus élevé parmi lesdites requêtes arrivées simultanément avant les autres.

Dans un mode de réalisation, lesdits moyens de mise à jour sont, en outre, aptes à traiter une requête, émise par anticipation par une desdites entrées et disparue avant que ladite sortie ne lui soit attribuée, comme si ladite sortie lui avait été attribuée.

Par exemple, l'ordre relatif OR(i,j) d'un couple d'entrées i,j distinctes appartenant au système vaut un lorsque l'entrée j est prioritaire sur l'entrée i, et zéro lorsque l'entrée i est prioritaire sur l'entrée j.

Par exemple, l'ordre relatif OR(i,j) d'un couple d'entrées i,j distinctes appartenant au système vaut zéro lorsque l'entrée j est prioritaire sur l'entrée i, et un lorsque l'entrée i est prioritaire sur l'entrée j.

Par exemple, lesdits moyens de mémorisation sont adaptés pour mémoriser lesdits ordres relatifs OR(i,j), pour tout couple d'entrées appartenant au système tel que i<j.

Par exemple lesdits moyens de mémorisation sont adaptés pour mémoriser lesdits ordres relatifs OR(i,j), pour tout couple d'entrées appartenant au système tel que i>j.

Selon un mode de réalisation, le système comprend en outre des deuxièmes moyens d'arbitrage dédiés à une deuxième sortie. Lesdits premiers et deuxièmes moyens d'arbitrage sont adaptés pour déterminer l'entrée, correspondant à une requête, à laquelle est attribuée ladite deuxième sortie de sorte qu'une seule autre entrée ait une requête plus prioritaire.

Les deuxièmes moyens d'arbitrage fournissent un choix différent de celui des premiers moyens d'arbitrage. Tout se passe comme si on arbitrait une première fois, puis une deuxième fois en tenant compte du premier arbitrage.

Un tel double-arbitre est très rapide, car il n'est pas fait par empilage de deux arbitres.

Dans un mode de réalisation, le système comprend, en outre, des troisièmes et quatrièmes moyens d'arbitrage, montés en parallèle formant un deuxième double-arbitre (63c), des moyens d'affectation desdites deux sorties, coopérant avec lesdits premiers et deuxièmes moyens d'arbitrage montés en parallèle et formant un premier double-arbitre, et avec ledit deuxième double-arbitre (63c). Ledit premier double-arbitre (62c) reçoit les requêtes prioritaires, et ledit deuxième double-arbitre (63c) reçoit les requêtes non prioritaires, lesdites requêtes ne pouvant avoir que deux niveaux de priorité, prioritaire ou non prioritaire.

Un tel double arbitrage avec filtrage de priorité est de surface réduite, car de nombreux éléments du système sont partagés par les moyens d'arbitrage, ce qui permet d'effectuer les calculs critiques en parallèle avec un coût réduit.

Selon un mode de réalisation, lorsqu'au moins deux requêtes prioritaires sont reçues par ledit premier double-arbitre, lesdits moyens d'affectation affectent lesdites deux sorties aux deux requêtes prioritaires ayant les ordres relatifs les plus élevés.

Dans un mode de réalisation, lorsqu'une seule requête prioritaire est reçue par ledit premier double-arbitre, lesdits moyens d'affectation affectent lesdites deux sorties à ladite requête prioritaire et à la requête non prioritaire ayant l'ordre relatif le plus élevé reçue par ledit deuxième double-arbitre.

Selon un mode de réalisation, lorsqu'aucune requête prioritaire n'est reçue par ledit premier double-arbitre, lesdits moyens d'affectation affectent lesdites deux sorties aux deux requêtes non prioritaires ayant les ordres relatifs les plus élevés reçues par ledit deuxième double-arbitre.

D'autres buts, caractéristiques et avantages de l'invention apparaîtront à la lecture de la description suivante, de quelques exemples nullement limitatifs, et faite en référence aux dessins annexés, sur lesquels :

- la figure 1 illustre les ordres relatifs OR(i,j) affectées aux couples d'entrées du système selon un aspect de l'invention ;
- la figure 2 représente un exemple de réalisation de détermination du signal de sélection de l'entrée i selon un aspect de l' invention ;
- la figure 3 représente un mode de réalisation des moyens de mise à jour des ordres relatifs OR(i,j), selon un aspect de l'invention ;
- la figure 4 représente un mode de réalisation des moyens de filtrage, selon un aspect de l'invention ;
- la figure 5 illustre un système de commutation de messages selon un aspect de l'invention ;
- la figure 6 illustre un système de commutation de messages selon un aspect de l'invention ;
- la figure 7 illustre un système de commutation de messages selon un aspect de l'invention ; et
- la figure 8 représente un exemple de réalisation de détermination simultanée des signaux de sélection des entrées $i_1$ et $i_2$ selon un aspect de l'invention.

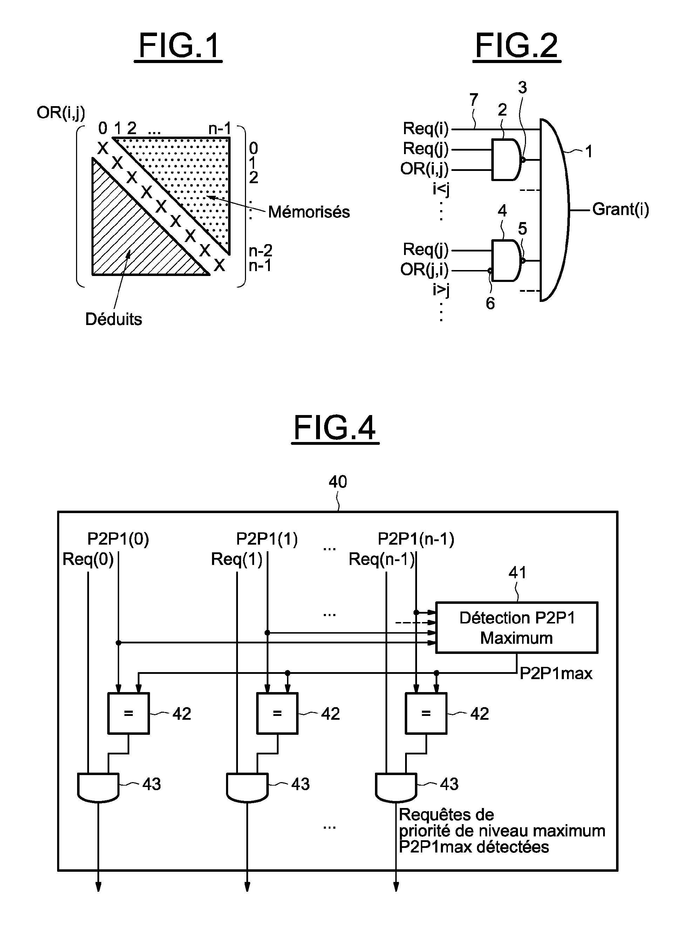

La figure 1 illustre le traitement des ordres relatifs OR(i,j).

On mémorise, pour chaque couple d'entrées d'un module d'arbitrage dédié à une sortie d'un système de commutation de messages, les ordres relatifs OR(i,j) d'une entrée par rapport à l'autre, à un instant donné. Pour un arbitrage à n entrées, il est donc nécessaire de mémoriser n(n-1)/2 valeurs.

Par exemple, si on numérote les entrées d'un module d'arbitrage, qui sont les entrées du système, de 0 à n-1, on définit, pour i et j entiers compris entre 0 et n-1 et tels que i est différent de j, l'ordre relatif OR(i,j) de l'entrée j sur l'entrée i, qui vaut 1 lorsque l'entrée j est prioritaire sur l'entrée i et 0 dans le cas contraire.

Bien entendu, il serait également possible de définir l'ordre relatif OR(i,j) de l'entrée j sur l'entrée i, comme valant 0 lorsque l'entrée j est prioritaire sur l'entrée i, et 1 dans le cas contraire.

Il suffit alors de mémoriser OR(i,j) uniquement pour i<j, et de prendre pour OR(j,i) la valeur inverse de OR(i,j).

On entend par valeurs inverses les valeurs 0 et 1.

Bien entendu, il serait également possible de mémoriser OR(i,j) uniquement pour i>j, et de prendre pour OR(j,i) la valeur inverse de OR(i,j).

Dans la suite de la description, on décrit le cas dans lequel on définit, pour i et j entiers compris entre 0 et n-1 et tels que i est différent de j, l'ordre relatif OR(i,j) de l'entrée j sur l'entrée i, comme valant 1 lorsque l'entrée j est prioritaire sur l'entrée i et 0 dans le cas contraire, et dans lequel on mémorise OR(i,j) uniquement pour i<j, et on prend pour OR(j,i) la valeur inverse de OR(i,j).

A l'initialisation, on peut prendre arbitrairement OR(i,j)=0 quels que soient i et j, et dans ce cas au départ l'entrée numérotée 0 est plus prioritaire que l'entrée numérotée 1, elle-même plus prioritaire que l'entrée numérotée 2, et ainsi de suite.

L'ordre d'initialisation peut être quelconque mais les OR(i,j) doivent cependant être cohérents.

En effet, si OR(i,j)=OR(j,k)=OR(k,i), au départ, on pourrait se retrouver dans une situation où aucune entrée n'est sélectionnée ou bien dans une situation plus conflictuelle dans laquelle plus d'une entrée serait sélectionnée.

On peut ainsi calculer très rapidement les conditions d'attribution des entrées à partir du moment où les requêtes sont connues.

La figure 2 illustre comment le signal de sélection Grant(i) de l'entrée i est calculé à partir des ordres relatifs OR(i,j) des autres entrées par rapport à l'entrée i.

Pour qu'une entrée soit sélectionnée, il faut qu'il y ait une requête sur cette entrée et qu'il n'y ait pas d'autre requête sur une entrée plus prioritaire.

Le chemin critique de décision à partir des requêtes est de 1+log(n) portes. On ne mémorise que les OR(i,j) avec i strictement inférieur et différent de j, i varie donc de 0 à n-2 et j varie de 1 à n-1, il y a donc n(n-1)/2 coefficients à mémoriser.

Le circuit est réalisé au moyen d'un ET logique 1, d'un ET logique 2 avec inverseur de signal 3 en sortie et d'un ET logique 4 avec inverseur de signal en sortie 5 et inverseur de signal 6 sur l'entrée correspondant à OR(i,j). Le ET logique 1 reçoit en entrée 7 le signal Req(i) représentant la présence (1) ou l'absence (0) de requête sur l'entrée i et sa priorité. Le ET logique 1 reçoit également en entrée les sorties inversées des ET logiques 2 et 4. Ainsi, pour chaque signal Grant(i), il faut un ET logique 1 et une pluralité de portes logiques 2, 3, 4, 5 et 6.

Il ne peut y avoir d'arbitrage plus rapide, car log(n) portes un est optimum de nombre de portes logiques.

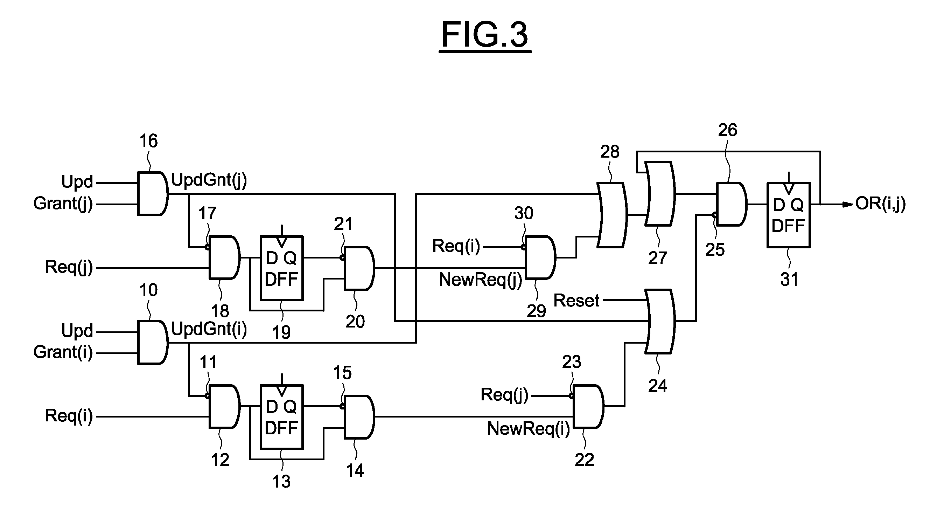

Comme illustré sur la figure 3, les ordres relatifs OR(i,j) sont modifiés, soit à l'arrivée de chaque nouvelle requête sur les entrées i ou j, soit quand une attribution de la sortie est effectuée au profit de l'une de ces deux entrées i ou j. Lorsqu'une requête arrive et obtient la sortie dans le même cycle, elle n'est pas considérée comme une nouvelle requête, en d'autres termes, le signal NewReq correspondant ne passe pas à 1.

Les priorités OR(i,j) sont mises à jour quand une nouvelle requête arrive sur l'entrée i ou j ou quand l'attribution de la sortie est faite sur l'entrée i ou j. Ceci permet de tenir compte à la fois de l'âge des requêtes, car leur ordre d'émission est conservé grâce aux OR(i,j) correspondants, et de l'ordre dans lequel les entrées ont été servies (sortie affectée) alors qu'il n'y a plus de requêtes sur ces entrées.

Par exemple, si on définit une nouvelle requête comme étant une requête non présente au cycle d'horloge précédent, mais non acquittée dans le cycle courant, on affecte la valeur 0 à OR(i,j) quand la sortie est attribuée à l'entrée j ou quand il y a une nouvelle requête sur l'entrée i et pas de requête sur l'entrée j, et on affecte la valeur 1 à OR(i,j) quand la sortie est attribuée à l'entrée i ou quand il y a une nouvelle requête sur l'entrée j et pas de requête sur l'entrée i.

On combine ainsi les avantages des méthodes FCFS et LRU, assurant ainsi une parfaite équité dans l'attribution de la sortie. De plus, si l'on compare cette nouvelle implémentation aux solutions existantes, on obtient d'excellentes performances pour un faible coût en nombre de portes logiques.

La sortie n'est attribuée que quand le lien de sortie est libre, le signal Upd sert à valider cette attribution à partir du choix décidé, repéré par l'unique Grant(i) actif. On calcule alors pour chaque entrée les signaux UpdGnt(i) et NewReq(i). Le signal NewReq(i) est représentatif de la nouveauté ou non de la requête de l'entrée i, et le signal UpdGnt(i) est représentatif du fait que l'entrée i a été choisie et que la sortie est prête pour traiter la requête associée à cette entrée.

Le fait de ne pas modifier les ordres relatifs OR(i,j) des anciennes requêtes conserve l'ordre d'arrivée des requêtes. Le fait de remettre OR(i,j) à 1 quand UpdGnt(i) vaut 1 ou OR(i,j) à 0 quand UpdGnt(j) vaut 1, revient à affecter l'ordre relatif le plus faible à l'entrée qui vient de se voir attribuer la sortie, ainsi, lorsqu'ultérieurement, deux nouvelles requêtes d'attribution arrivent simultanément sur leur entrée respective, l'ordre entre elles est fixé en fonction des délais écoulés depuis leur dernière attribution respective de la sortie, l'entrée à laquelle a été attribuée la sortie le plus récemment étant la moins prioritaire.

L'arrivée d'une nouvelle requête sur l'une des entrées peut remettre en cause son ordre relatif par rapport aux autres entrées. Si sur l'autre entrée il y a aussi une requête, alors l'ordre relatif n'a pas à être modifié même s'il s'agit aussi d'une nouvelle requête, par contre dans le cas où il n'y a pas de requête sur l'autre entrée, cette nouvelle requête devient prioritaire. OR(i,j) est mis à 0 si on a NewReq(i) et pas Req(j), et par symétrie OR(i,j) est mis à 1 si on a NewReq(j) et pas Req(i).

L'attribution de la sortie à une requête qui vient juste d'arriver entraîne le positionnement de l'entrée correspondante à l'ordre relatif minimum quel que soit l'état des autres entrées, donc on n'a pas intérêt à traiter ce genre de situation comme on traite les nouvelles requêtes. Le fait que plusieurs nouvelles requêtes arrivent simultanément ne pose aucun problème.

A part l'initialisation où l'on fixe un ordre arbitraire entre les entrées, par la suite les ordres relatifs sont fixés de manière à servir les requêtes de la façon la plus équitable possible.

Ceci est réalisé, par exemple, comme illustré sur la figure 3.

Lorsque des requêtes sont soumises par anticipation, et peuvent donc éventuellement disparaître avant d'obtenir la sortie, ces requêtes sont traitées comme si la sortie leur avait été attribuée.

On réalise ainsi un arbitre rapide, à faible coût, équitable, sachant gérer plusieurs niveaux de priorités dynamiques, et qui conserve à la fois l'ordre des requêtes et l'ordre des attributions de la sortie, assurant ainsi une meilleure régulation du trafic pour le réseau.

Ainsi, un ET logique 10 reçoit en entrée les valeurs Upd et Grant(i) et délivre en sortie la valeur UpdGnt(i). La valeur UpdGnt(i) est dupliquée sur un inverseur 11 en entrée d'un ET logique 12. Le ET logique 12 reçoit, en outre, en entrée la valeur Req(i). Le signal de sortie du ET logique 12 est, d'une part, transmis à une bascule 13, et, d'autre part, à un ET logique 14. La sortie de la bascule 13 est transmise au ET logique 14 après inversion par un inverseur 15. UpdGnt(i) vaut 1 lorsque la sortie est libre pour satisfaire une requête en attente.

De même, un ET logique 16 reçoit en entrée les valeurs Upd et Grant(j) et délivre en sortie la valeur UpdGnt(j). La valeur UpdGnt(j) est dupliquée sur un inverseur 17 en entrée d'un ET logique 18. Le ET logique 18 reçoit, en outre, en entrée la valeur Req(j). Le signal de sortie du ET logique 18 est, d'une part, transmis à une bascule 19, et, d'autre part, à un ET logique 20. La sortie de la bascule 19 est transmise au ET logique 20 après inversion par un inverseur 21.

La sortie du ET logique 14 est transmise en entrée d'un ET logique 22, recevant également en entrée Req(j) inversé par un inverseur 23. La sortie du ET logique 22 est transmise à un OU logique 24, recevant, en outre, en entrée, UpdGnt(j) de sortie du ET logique 16, et une information de réinitialisation Reset.

La sortie du OU logique 24 est transmise après inversion par un inverseur 25 à un ET logique 26. Le ET logique 26 reçoit également en entrée la sortie d'un OU logique 27.

Le OU logique 27 reçoit en entrée la sortie d'un OU logique 28 recevant en entrée UpdGnt(i) délivré par le ET logique 10 et la sortie d'un ET logique 29.

Le ET logique 29 reçoit en entrée, d'une part, NewReq(j) délivré par le ET logique 20, et, d'autre part, Req(i) inversé par un inverseur 30.

La sortie du ET logique 26 est transmise à une bascule 31, qui délivre en sortie OR(i,j). Le signal OR(i,j) est transmis par une boucle de rétroaction en entrée du OU logique 37.

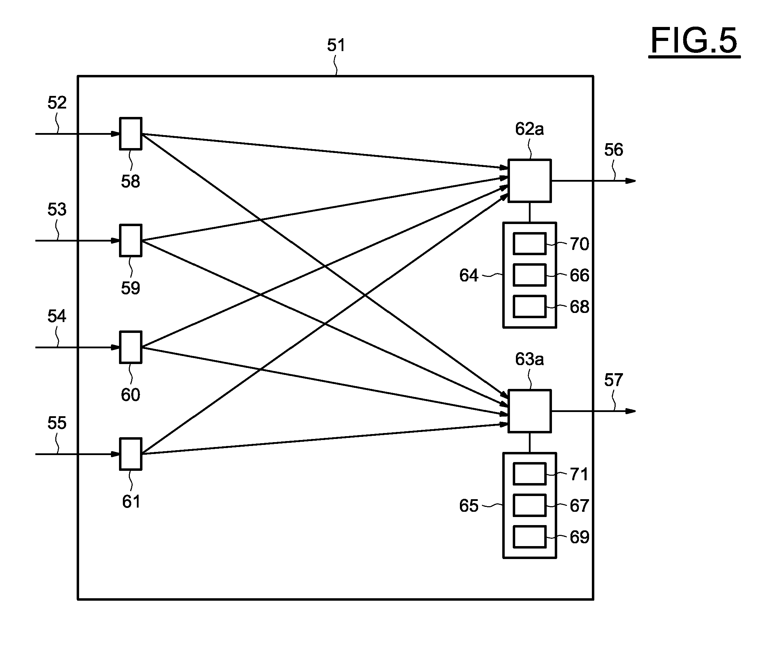

La figure 4 illustre un mode de réalisation d'un module de filtrage 40 utilisable devant un module d'arbitrage dédié à une unique sortie, selon un aspect de l'invention.

P1 et P2 sont deux signaux permettant de coder un niveau de priorité, pour un faible nombre de niveaux de priorité ou de qualité de service, ce qui est le cas général. En d'autres termes, lorsqu'il n'y a pas d'urgence ou priorité, P2P1=00 (niveau 0), lorsqu'il y a urgence de niveau faible, P2P1=01 (niveau 1), et lorsqu'il y a urgence de niveau élevé, P2P1=11 (niveau 2), ceci permet de déterminer rapidement le niveau de priorité maximum P1P2max.

Les requêtes sont ensuite filtrées en fonction de la priorité maximum détectée. Seules sont conservées celles qui ont ce niveau maximum de priorité.

Puis, parmi les requêtes filtrées, la plus ancienne ou à défaut celle dont l'entrée a été servie pour la dernière fois depuis longtemps, est choisie.

On réalise ainsi un arbitre qui tient compte des priorités dynamiques, ou de l'âge des requêtes Req(i) ou de l'âge des attributions UpdGnt(i). On a donc une solution très rapide et très équitable.

La figure 4 illustre un exemple de réalisation de module de filtrage 40 comprenant un module 41 de détection du niveau de priorité maximum, des comparateurs 42 pour comparer, pour chaque requête Req(i), si la priorité de la requête Req(i) est égale à ladite priorité maximum détectée par le module de détection 41.

La sortie de chaque comparateur 42 est transmise à l'entrée d'un ET logique 43, recevant, en outre, en entrée, Req(i).

En sortie, les requêtes de priorité de niveau maximum sont détectées.

Pour supporter l'anticipation des requêtes et donc la possibilité de rétractation, il suffit de considérer que les requêtes qui ont disparues sont traitées comme celle qui a été sélectionnée et validée (celle avec UpdGnt(i)=1).

On rappelle les conventions de notation suivantes :

-A est l'inverse logique de A

& et | sont les opérations ET logique et OU logique

Reg(A) est la valeur logique de A au cycle précédent.

Avec la même définition pour NewReq(i)=Req(i)&~UpdGnt(i) &~Reg(Req(i)&~UpdGnt(i)), on définit AutoGnt(i) qui vaut 1 après une rétractation :

$$AutoGnt(i) = \sim Req(i)\,\&\,Reg(Req(i)\,\&\,\sim UpdGnt(i))$$

On introduit alors la notion de Grant effectif généralisé : FullGnt(i)=UpdGnt(i)|AutoGnt(i) qui vaut un quand une requête a été traitée ou a disparue. Le FullGnt(i) remplace l'ancien UdpGnt(i) dans les équations de mise à jour de OR(i,j). Dans le cas où FullGnt(i) et FullGnt(j) valent tous les deux 1, OR(i,j) ne change pas. Les nouvelles équations sont donc :

$$OR(i,j) \text{ mis à } 1 \text{ si } \sim FullGnt(j)\,\&\,(FullGnt(i) \mid (NewReq(j)\,\&\,\sim Req(i)))$$

$$OR(i,j) \text{ mis à 0 si}[\sim FullGnt(i)\&(FullGnt(j) \mid (NewReq(j)\& \sim Req(j)))] \mid$$

$$Reset$$

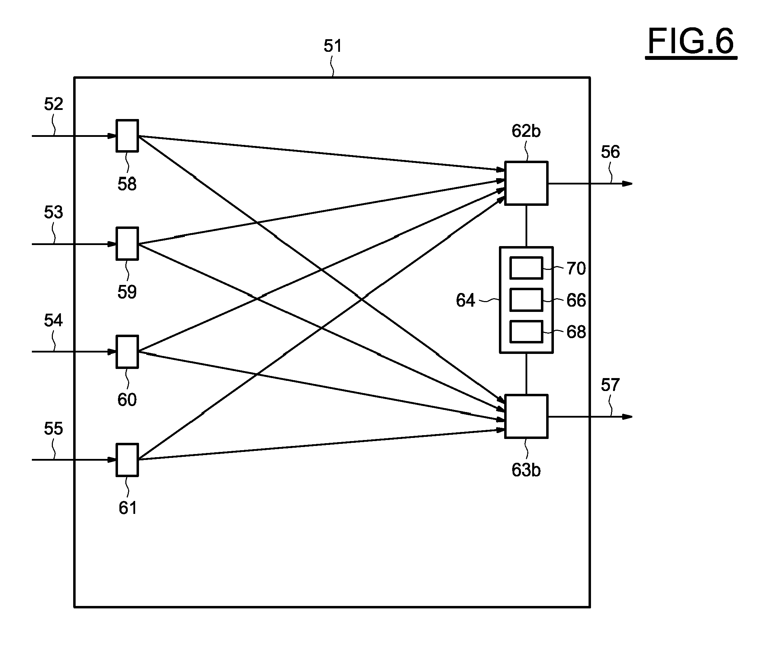

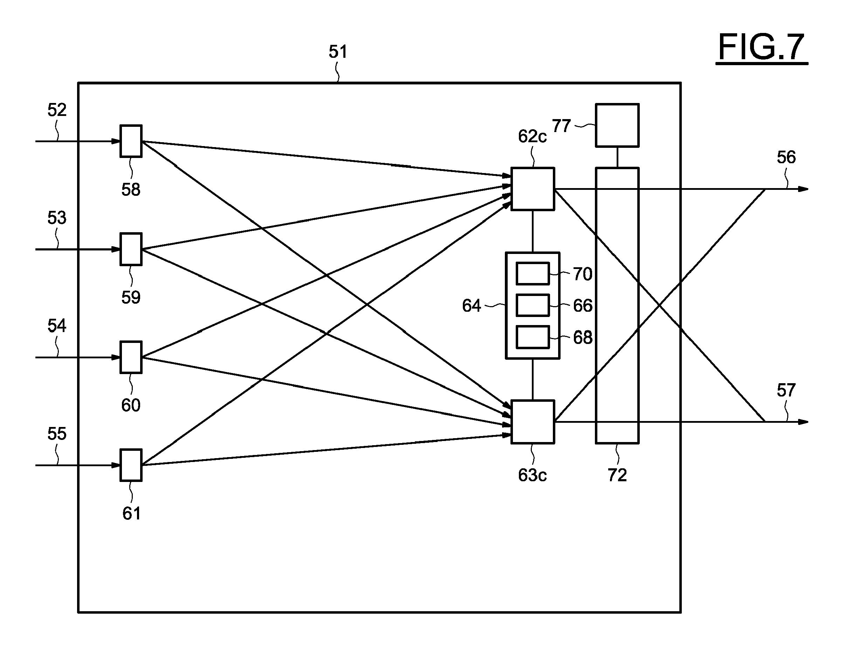

On remarquera que ces équations restent valables dans le cas d'un système à choix multiples sur plusieurs sorties tel qu'illustré sur les figures 6 et 7, puisque l'on traite ici les cas à plusieurs FullGnt simultanés.

Tel qu'illustré sur la figure 5, un système de commutation de message 51 comprend quatre entrées 52, 53, 54, 55, et deux sorties indépendantes 56, 57.

A chaque entrée, est associé un module de routage. Les première, deuxième, troisième et quatrième entrées 52, 53, 54, 55 comprennent respectivement un premier, deuxième, troisième et quatrième modules de routage 58, 59, 60, 61.

Les sorties 56, 57 comprennent respectivement un module d'arbitrage dédié 62, 63.

Les modules d'arbitrage 62, 63 coopèrent respectivement avec un module de gestion 64, 65.

Les modules de gestion 64, 65 comprennent respectivement un module d'initialisation 66, 67, un module de mise à jour 68, 69, et un module de mémorisation 70, 71 des ordres relatifs OR(i,j).

Toute requête qui a une priorité dynamique supérieure à celle d'une autre requête est prioritaire sur cette dernière, et si deux requêtes ont le même niveau de priorité dynamique, la priorité est celle donnée par les ordres relatifs OR(i,j) des entrées correspondantes.

On appelle priorité dynamique un signal de priorité (ou de qualité de service) associé à une requête en entrée d'un système de commutation de messages.

Un tel dispositif permet de gérer les situations d'urgence tout en conservant dans la mesure du possible une certaine équité entre les entrées.

Si deux requêtes ont le même niveau de priorité dynamique, alors la priorité est donnée à la requête la plus ancienne, et si plusieurs requêtes de même niveau de priorité dynamique arrivent simultanément, la priorité est donnée à celle dont l'entrée s'est vue attribuer la sortie pour la dernière fois, il y a le plus longtemps.

Sur la figure 6, les éléments ayant les mêmes références que sur la figure 5 sont identiques.

Le module de gestion 64 est commun aux deux modules d'arbitrage 62b et 63b. Sur la figure 6, le double arbitre comprenant les deux modules 62b et 63b doit choisir deux requêtes différentes simultanément pour les deux sorties 56 et 57 qui sont équivalentes. Les deux modules partagent le module de gestion 64.

La figure 7, représente une variante du système de la figure 6, dans lequel on utilise en parallèle deux double arbitres selon la figure 6. On partage, en outre le module de gestion 64. Les éléments ayant les mêmes références sont identiques.

Les deux modules d'arbitrage 62c, 63c, sont tous deux dédiées aux deux sorties 56, 57. Chaque module d'arbitrage 62c et 63c comprend donc un double arbitre comprenant les modules 62b et 63b tel qu'illustré sur la figure 6.

En outre, un module d'affectation 72 coopère avec les deux modules d'arbitrage 62c, 63c, et un module de dénombrement 77 commande le module d'affectation 72.

Dans un système, comme illustré sur les figures 5 et 6, on cherche à déterminer, parmi les entrées présentant une requête, celle pour laquelle il n'y a pas d'autre entrée avec une priorité relative supérieure, et pour un système comme illustré sur les figures 6 et 7, il faut ajouter la recherche de l'entrée pour laquelle il n'y a qu'une seule autre entrée avec requête ayant un ordre relatif supérieur.

On détecte si, pour une entrée i donnée (avec requête), il n'y a aucun OR(i,j) non nul avec j différent de i.

On détermine, en outre, si, pour une entrée donnée (avec requête), il y a un et un seul OR(i,j) non nul avec j différent de i.

On construit un double arbitre en ajoutant pour chaque entrée un deuxième arbre de calcul à base de cellules ET/OU tout en gardant une seule table des ordres relatifs mémorisée dans le module de mémorisation 70, et même module d'initialisation et de mise à jour.

Ceci permet de sélectionner deux requêtes parmi une pluralité de requêtes sans pour cela payer le coût de deux modules d'arbitrage indépendants, tant en temps d'exécution qu'en nombre de portes utilisées.

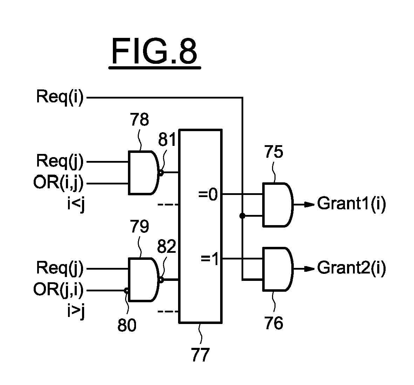

Ceci est réalisé, par exemple, au moyen du montage de la figure 8.

Le signal Req(i) est transmis en entrée de deux ET logiques 75 et 76.

Un module de dénombrement 77 délivre en sortie un signal représentant la détection d'un compte égal à zéro en entrée du ET logique 75 qui délivre en sortie Grant1(i).

En outre, le module de dénombrement 77, délivre en sortie un signal représentant la détection d'un compte à un en entrée du ET logique 76 qui délivre en sortie Grant2(i).

Pour i<j, une pluralité de ET logiques 78 reçoivent en entrée Req(j) et OR(i,j), et transmettent leur signal de sortie, inversé par un inverseur 81, au module de dénombrement 77.

Pour i>j, des ET logiques 79 reçoivent en entrée Req(j) et OR(i,j) inversé par des inverseurs 80, et délivrent leur signal de sortie, , inversée par un inverseur 81, au module de dénombrement 77.

La figure 8 illustre comment les signaux de sélection Grant1(i) et Grant2(i) de l'entrée i sont calculés à partir des ordres relatifs OR(i,j) des autres entrées par rapport à l'entrée i, pour un double arbitre.

La complexité étant plus grande, on se limite à deux niveaux de priorité : prioritaire et non prioritaire.

Comme les arbres de calcul des Grant1(i) et Grant2(i) sont d'un faible coût par rapport au dispositif mis en commun (cf figure 3), dupliquer le double arbitre se réduit à dupliquer uniquement ses arbres de calcul afin de paralléliser les calculs. On a donc une réduction des délais (parallélisme) et un coût réduit (partage des parties coûteuses). La mise en parallèle de deux doubles arbitres permet de traiter en parallèle et séparément les requêtes prioritaires (compte de priorités).

Le dispositif correspondant est alors similaire à celui de la figure 3, sauf que l'on a :

$$UpdGrant(i) = (Grant(i)\&Upd1)|(Grant2(i)\&Upd2)$$

Les requêtes prioritaires sont transmises sur un premier module d'arbitrage 62c et les requêtes non prioritaires sont envoyées sur un deuxième module d'arbitrage 63c. Les modules de mémorisation 70, de mise à jour 68, et d'initialisation 66 sont communs aux deux modules d'arbitrage 62c, 63c. Dans le même temps, avec le module de dénombrement 77, on détermine s'il y a une, zéro ou plusieurs requêtes prioritaires.

Dans le cas où il n'y a pas de requête prioritaire, on ne s'intéresse qu'aux deux résultats du deuxième module d'arbitrage 63c. Dans le cas où il n'y a qu'une requête prioritaire, l'entrée correspondante est forcément sélectionnée sur le Grant1 du premier module d'arbitrage 62c et la deuxième entrée correspond à la sélection sur le Grant1 du deuxième module d'arbitrage 63c. Dans les autres cas, il y a au moins deux requêtes prioritaires et on ne s'intéresse qu'aux résultats du premier module d'arbitrage 62c.

Un tel système a un temps théorique d'arbitrage correspondant à environ 1,5 log(n)+5 portes, donc très rapide. Avec les OR(i,j) décrits précédemment, on peut tenir compte de l'âge des requêtes et du temps écoulé depuis le dernier Grant, l'arbitrage reste donc tout à fait équitable.

Compte tenu du faible nombre de portes logiques mises en jeu, on duplique les arbres de calcul du double arbitre et on partage la table des ordres relatifs du module de mémorisation 70 ainsi que les modules de mise à jour 68 et d'initialisation 66 de la table, le premier module d'arbitrage 62c étant dédié aux requêtes prioritaires et le deuxième module d'arbitrage 63c étant dédié aux requêtes non prioritaires. Ainsi, on obtient un double arbitre avec filtrage de priorités utilisant un double arbitre, c'est-à-dire 4 arbres d'arbitrage mettant en commun les mêmes ordres relatifs OR(i,j).

Un comptage du nombre de requêtes prioritaires permet de sélectionner, s'il y a plus d'une requête prioritaire, les deux entrées avec des requêtes prioritaires dont les ordres relatifs sont les plus élevés, s'il n'y a qu'une seule requête prioritaire, l'entrée avec requête prioritaire et celle avec une requête non prioritaire dont l'ordre relatif est le plus élevé, et s'il n'y a pas de requête prioritaire, les deux entrées avec des requêtes non prioritaires dont les ordres relatifs sont les plus élevés.

Les ordres relatifs sont, en outre, fixés en fonction de l'ancienneté des requêtes. Lorsqu'une requête disparaît ou obtient la sortie, les entrées respectives ont une priorité ramenée à la priorité minimum, les ordres relatifs entre ces entrées restant inchangés. Toute nouvelle requête sur l'entrée j, sans attribution de sortie pour l'entrée i ou l'entrée j et sans disparition de la requête sur l'entrée i, met l'ordre relatif OR(i,j) à 0.

Dans un tel système, seuls les arbres de calcul des Grant1(i) et Grant2(i) sont doublés, donc l'augmentation du nombre de portes reste limité à environ 20%. Par rapport à la solution classique qui consiste à mettre deux modules d'arbitrage en série, les gains en vitesse et en surface sont significatifs.

**Revendications**

1. Système de commutation de messages (51) sur puce comprenant au moins deux entrées (52, 53 54, 55) et au moins une sortie (56), des premiers moyens d'arbitrage (62) dédiés à ladite sortie (56), et des moyens de gestion (64) adaptés pour déterminer un ordre relatif OR(i,j) d'une entrée par rapport à l'autre, pour tout couple d'entrées distinctes appartenant au système (51) et ayant émis des requêtes d'attribution de ladite sortie (56), et adaptés pour attribuer ladite sortie (56), **caractérisé en ce que** lesdits moyens de gestion (64) comprennent des moyens de mémorisation (70) adaptés pour mémoriser lesdits ordres relatifs OR(i,j), des moyens d'initialisation (66) adaptés pour initialiser lesdits ordres relatifs OR(i,j) de telle sorte qu'une seule desdites entrées soit prioritaire à l'initialisation, et des moyens de mise à jour (68) aptes à mettre à jour l'ensemble desdits ordres relatifs lorsqu'une nouvelle requête arrive auxdits premiers moyens d'arbitrage (62), ou lorsque ladite sortie est attribuée à une desdites entrées.

**2.** Système selon la revendication 1, dans lequel lesdits moyens de gestion (64) sont adaptés pour attribuer l'ordre relatif OR(i,j) d'une entrée par rapport à l'autre, pour tout couple d'entrées distinctes appartenant au système (51), en fonction de l'ordre d'arrivée des requêtes correspondantes, l'entrée pour laquelle la requête correspondante est arrivée en premier étant prioritaire, et sont adaptés, lorsque plusieurs requêtes arrivent simultanément, pour attribuer l'ordre relatif d'une entrée par rapport à l'autre, pour tout couple d'entrées distinctes appartenant au système (51), de sorte qu'une entrée est prioritaire sur une autre entrée quand ladite sortie (56) a été dernièrement attribuée à ladite entrée avant la dernière attribution de ladite sortie (56) à l'autre entrée.

**3.** Système selon la revendication 2, comprenant, en outre, des moyens de filtrage adaptés pour filtrer la ou les requêtes d'attribution de sortie émises par des entrées à destination de ladite sortie (56) en sélectionnant la ou les requêtes les plus prioritaires et de priorité identique parmi la ou lesdites requêtes d'attribution, lorsque lesdites requêtes peuvent être de priorités différentes.

**4.** Système selon la revendication 3, dans lequel lesdits moyens de gestion (64) sont adaptés, lorsqu'une unique requête est sélectionnée par lesdits moyens de filtrage, pour attribuer ladite sortie (56) à ladite unique requête sélectionnée par lesdits moyens de filtrage,
lorsque plusieurs requêtes sont sélectionnées par lesdits moyens de filtrage et qu'une desdites requêtes sélectionnées est arrivée avant les autres, pour attribuer ladite sortie à ladite requête arrivée avant les autres parmi les requêtes sélectionnées, et
lorsque plusieurs requêtes sont sélectionnées par lesdits moyens de filtrage et sont arrivées simultanément avant les autres requêtes sélectionnées, pour attribuer ladite sortie (56) à la requête ayant l'ordre relatif le plus élevé parmi lesdites requêtes arrivées simultanément avant les autres.

**5.** Système selon l'une quelconque des revendications précédentes, dans lequel lesdits moyens de mise à jour (68) sont, en outre, aptes à traiter une requête, émise par anticipation par une desdites entrées et disparue avant que ladite sortie (56) ne lui soit attribuée, comme si ladite sortie (56) lui avait été attribuée.

**6.** Système selon l'une quelconque des revendications 1 à 5, dans lequel, l'ordre relatif OR(i,j) d'un couple d'entrées i,j distinctes appartenant au système (51) vaut un lorsque l'entrée j est prioritaire sur l'entrée i, et zéro lorsque l'entrée i est prioritaire sur l'entrée j.

**7.** Système selon l'une quelconque des revendications 1 à 5, dans lequel, l'ordre relatif OR(i,j) d'un couple d'entrées i,j distinctes appartenant au système (51) vaut zéro lorsque l'entrée j est prioritaire sur l'entrée i, et un lorsque l'entrée i est prioritaire sur l'entrée j.

**8.** Système selon la revendication 6 ou 7, dans lequel lesdits moyens de mémorisation (70) sont adaptés pour mémoriser lesdits ordres relatifs OR(i,j), pour tout couple d'entrées appartenant au système tel que i<j.

**9.** Système selon la revendication 6 ou 7, dans lequel lesdits moyens de mémorisation (70) sont adaptés pour mémoriser lesdits ordres relatifs OR(i,j), pour tout couple d'entrées appartenant au système tel que i>j.

**10.** Système selon l'une quelconque des revendications précédentes, comprenant en outre des deuxièmes moyens d'arbitrage (63b) dédiés à une deuxième sortie (57), lesdits premiers et deuxièmes moyens d'arbitrage (62b, 63b) étant adaptés pour déterminer l'entrée, correspondant à une requête, à laquelle est attribuée ladite deuxième sortie (57) de sorte qu'une seule autre entrée ait une requête plus prioritaire.

**11.** Système selon la revendication 10, comprenant, en outre, des troisièmes et quatrièmes moyens d'arbitrage montés en parallèle formant un deuxième double-arbitre (63c), des moyens d'affectation (72) desdites deux sorties (56, 57), coopérant avec lesdits premiers et deuxièmes moyens d'arbitrage montés en parallèle et formant un premier double-arbitre (62c), et avec ledit deuxième double-arbitre (63c), ledit premier double-arbitre (62c) recevant les requêtes prioritaires, et ledit deuxième double-arbitre (63c) recevant les requêtes non prioritaires, lesdites requêtes ne pouvant avoir que deux niveaux de priorité, prioritaire ou non prioritaire.

**12.** Système selon la revendication 11, dans lequel, lorsqu'au moins deux requêtes prioritaires sont reçues par ledit premier double-arbitre (62c), lesdits moyens d'affectation (72) affectent lesdites deux sorties (56, 57) aux deux requêtes prioritaires ayant les ordres relatifs les plus élevés.

**13.** Système selon la revendication 11 ou 12, dans lequel, lorsqu'une seule requête prioritaire est reçue par ledit premier double-arbitre (62c), lesdits moyens d'affectation (72) affectent lesdites deux sorties (56, 57) à ladite requête prioritaire et à la requête non prioritaire ayant l'ordre relatif le plus élevé reçue par ledit deuxième double-arbitre (63c).

**14.** Système selon l'une des revendications 11 à 13, dans lequel, lorsqu'aucune requête prioritaire n'est reçue par ledit premier double-arbitre (62c), lesdits moyens d'affectation (72) affectent lesdites deux sorties (56, 57) aux deux requêtes non prioritaires ayant les ordres relatifs les plus élevés reçues par ledit deuxième double-arbitre (63c).

# FIG.1

# FIG.2

# FIG.4

# FIG.3

EP 1 841 151 A1

FIG.5

# FIG.6

FIG.7

EP 1 841 151 A1

# FIG.8

**Office européen des brevets**

**RAPPORT DE RECHERCHE EUROPEENNE**

Numéro de la demande

EP 07 10 2227

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 97/29574 A (ADVANCED MICRO DEVICES INC [US]) 14 août 1997 (1997-08-14) | 1-10 | INV. H04L12/56 |
| A | * page 5, ligne 14 - ligne 28 * <br> * page 8, ligne 21 - page 9, ligne 35 * <br> * page 11, ligne 1 - ligne 10 * <br> ----- | 11-14 | |
| A | EP 1 006 694 A2 (AGENCY IND SCIENCE TECHN [JP]; YAMASAKI NOBUYUKI [JP]) 7 juin 2000 (2000-06-07) <br> * revendication 2 * <br> * colonne 7, ligne 11 - ligne 18 * <br> ----- | 1-14 | |
| A | US 2003/227932 A1 (MEEMPAT GOPALAKRISHNAN [US] ET AL) 11 décembre 2003 (2003-12-11) <br> * le document en entier * <br> ----- | 1-14 | |
| A | CHI-CHUNG CHEUNG ET AL: "Fuzzy service scheduling scheme in ATM networks" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, vol. VOL. 1 OF 10, 11 juin 2001 (2001-06-11), pages 3122-3124, XP010553828 ISBN: 0-7803-7097-1 <br> * section II * <br> * figure 1 * <br> ----- | 1-14 | **DOMAINES TECHNIQUES RECHERCHES (IPC)** <br><br> H04L |

Le présent rapport a été établi pour toutes les revendications

| Lieu de la recherche | Date d'achèvement de la recherche | Examinateur |
|---|---|---|
| La Haye | 13 juillet 2007 | Pérez Pérez, José |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 07 10 2227

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-07-2007

| Document brevet cité au rapport de recherche | | Date de publication | Membre(s) de la famille de brevet(s) | | Date de publication |
|---|---|---|---|---|---|
| WO 9729574 | A | 14-08-1997 | US | 5784374 A | 21-07-1998 |
| EP 1006694 | A2 | 07-06-2000 | US | 6901074 B1 | 31-05-2005 |
| US 2003227932 | A1 | 11-12-2003 | AUCUN | | |

Pour tout renseignement concernant cette annexe : voir Journal Officiel de l'Office européen des brevets, No.12/82